# EUROPEAN PATENT APPLICATION

(11) **EP 2 179 973 A1**
(43) Date of publication of application: **28.04.2010**
(21) Application number: 08173043.4
(22) Date of filing: 29.12.2008
(51) Int. Cl.: C02F 11/04, C02F 1/34

(54) **Method and device for intensification of biogas production from communal sewage sludge**

(30) Priority: 22.10.2008 PL 38633008
(71) Applicant: Politechnika Lubelska, 20-219 Lublin (PL)
(72) Inventor: Montusiewicz, Agnieszka, 20-601 Lublin (PL); Pawlowski, Lucjan, 20-710 Lublin (PL); Ozonek, Janusz, 20-470 Lublin (PL); Pawlowska, Malgorzata, 20-710 Lublin (PL); Lebiocka, Magdalena, 20-492 Lublin (PL)
(74) Representative: Kaminski, Piotr

(57) **Abstract**

A method of intensification of biogas production from sewage sludge by means of cavitation in the spear cavitator is **characterised in that** crude sewage sludge is taken from the upper part of a cylindrical container and then it is forced by a pump to a spear cavitator, from which, following expansion it is delivered back by a duct from down into the cylindrical container. The sludge flows upwards and is then collected in the upper part of the container and transmitted to a reactor for methane production.

A device for intensification of biogas production from sewage sludge consists of cylindrical container (5), which in its lower side part is connected with a supply duct (4), which is connected with drum sieve (3) connected with a force pump (2) and a duct (1) which delivers crude sewage sludge to the container (5). In the upper side part the container (5) is connected by a duct (8) through a force pump (9) and a spear cavitator (7) and a duct (10) supplying from down to the container (5). In the upper part of the container (5) there is a duct (6) for transferring sludge to the methane fermentation reactor.

## Description

The present invention relates to a method and device for intensification of biogas production from communal sewage sludge.

Sewage sludge produced in communal sewage treatment plants is often utilised for production of biogas in the process of methane fermentation.

Methane fermentation is a biochemical process which occurs in anaerobic conditions and during which macromolecular organic substances at different oxidation state are converted into gaseous end products, mainly methane and carbon dioxide, and intermediate products, such as alcohols and fatty acids. Intermediate products, both mineral as well as organic are the source of carbon and energy for microorganisms. Process of methanogenesis is accompanied by microbiological reduction of sulphates into hydrogen sulphide and sulphides and aerobic ammonification and nitrates reduction.

In the process of conversion of organic compounds into biogass one can distinguish four phases:
Phase 1 - aerobic (hydrolysis), during which complex organic compounds such as hydrocarbons, proteins, fats are hydrolysed with use of catalytic enzymes. During this phase mainly monosaccharides, glycerol, amino acids and higher fatty acids are created.
Phase II - acidogenic (acidic), during this phase products of hydrolysis are converted by acidogenic bacteria into organic acids (formic acid, acetic acid, propionic acid and butyric acid), alcohols (methanol, ethanol), hydrogen and carbon dioxide. During this phase ammonia and hydrogen sulphide also are created and these compounds are responsible for odour nuisance.
Phase III - acetogenic, during which acetic acid is created. Decomposition of fatty acids, organic acids and alcohols causes release of hydrogen.
Phase IV - methanogenic, bacteria convert products of the previous phases into methane, carbon dioxide and water.
The problem is that only a part of organic mass undergoes methane fermentation. As a consequence, after the methane fermentation the sludge still contains large amounts of organic mass. The sludge after the methane fermentation, following drying to obtain the dry mass content of 90% has calorific value of 12-14 MJ/kg.

Many actions which aim at increase of the efficiency of methane production from sewage sludge are undertaken.

In Swedish patent WO 2004024640 a method for increasing the efficiency of methane production from sewage sludge is presented and it involves addition to the sludge a mixture of enzymes capable of decomposing the natural polymers into simple organic compounds, which during he methanogenesis are converted to methane.

In Japanese patent JP58074191 the discard subjected to methanation is first oxidised by use of oxidising gas, which in acidic or alkaline conditions decomposes macromolecular compounds into simpler compounds able to be converted into methane.

In their work published in "Water Science and Technology", 2006, No. 6(6), p. 35-42, Akim Beril et al present a method which involves disintegration of bacterial cells by use of ultrasounds. This method proved effective at low values of dry mass content. Along with increase of dry mass content the effectiveness of disintegration drops.

Korean patent KR 20060 86202 describes a method for efficiency increase of methane production from sewage sludge where the sludge was first etched at controlled pH.

Japanese patent JP2006280362 presents a method of increase of production of methane from sewage sludge where biomass subjected to fermentation is alkalised and the solution separated from sludge after fermentation is recirculated for initial alkaline treatment of the biomass subjected to fermentation.

The essence of the method of intensification of biogas production from sewage sludge by means of cavitation is that crude sewage sludge is taken from the upper part of the container and then it is forced by a force pump to a cavitator, from which, following expansion and straining out the solids of the size larger then 0,25 mm, it is delivered by a duct from down into a cylindrical container through which it flows and it is then collected in the upper part of container and transmitted to a reactor for methane production and the rate of flow of sewage sludge through a cavitator is several times higher than the rate of sludge delivery to the container.

The essence of a device for intensification of biogas production from sewage sludge, containing force pumps, spear cavitator and supply ducts is that it consists of cylindrical container, which in its lower side part is connected with the supply duct, which is connected with drum sieve connected with a force pump and a duct which delivers crude sewage sludge to the container, while in the upper side part the container is connected by a duct through a force pump and a spear cavitator and supply duct from down to the container, and the outlet of supply duct is directed to a disk having cut out conically edged furrows, whereas in the upper part of the container there is a duct for transferring sludge to the methane fermentation reactor.

Beneficial effect of the present invention is that it considerably increases efficiency of methane production from communal sewage sludge with concurrent decrease of the organic mass content in the fermented sludge.

An embodiment of the device for intensification of biogas production from sewage sludge is presented on the schematic drawing.

Sludge in cylindrical container is subjected to cavitation in the spear cavitator in such a way, that the sludge collected in the upper part of the container is forced by a pump to spear cavitator, from where expanded sludge is delivered from down to a cylindrical container. The stream of sludge is directed to a plate which has conically edged furrows cut out. The rate of flow of sludge through a spear cavitator is several times higher the rate of sludge delivery to the container.

Sewage sludge is delivered through a duct 1 with a built in pump 2 to a drum sieve 3 from where it is then delivered by duct 4 from down to cylindrical container 5. Subsequently the sludge is collected through a duct 6 fixed in the upper part of the container 5 and transmitted to reactor to be subjected to methane fermentation. Spear cavitator 7 is connected to container 5 in such a manner, that by a duct 8 built in the upper part of container 5 a sludge is collected and forced by a pump 9 to spear cavitator 7 and then it is forced through a duct 10 from down to container 5 in such a way, that the outlet of a duct 10 is directed to a disc 11 in which conically egded furrows are cut out.

The flow though spear cavitator is several times higher at least 5-times higher, then the rate of delivery of the fresh sludge.

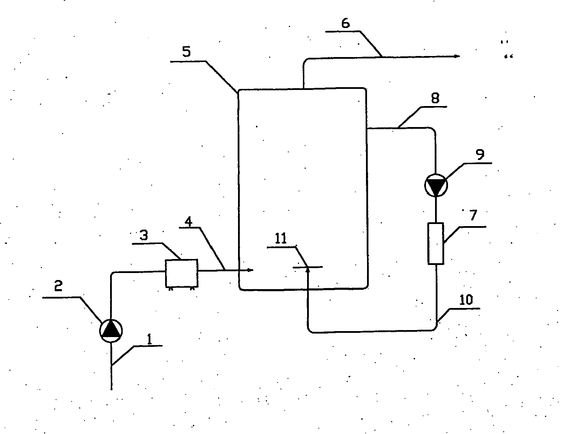

## Claims

1. A method of intensification of biogas production from sewage through cavitation in the spear cavitator **characterised in that** crude sewage sludge is taken from the upper part of the container and then it is forced by a force pump to a spear cavitator, from which, following expansion it is delivered by a duct from down into a cylindrical container through which it flows and it is then collected in the upper part of the container and transmitted to a reactor for methane production.

2. A method according to claim 1 **characterised in that** the rate of flow of sewage sludge through a spear cavitator is several times higher then the rate of sludge delivery to the container.

3. A device for intensification of biogas production from sewage sludge, containing force pumps, spear cavitator and supply ducts **characterised in that** it consists of cylindrical container (5), which in its lower side part is connected with the supply duct (4), which is connected with drum sieve (3) connected with a force pump (2) and a duct (1) which delivers crude sewage sludge to the container (5), while in the upper side part the container (5) is connected by a duct (8) through a force pump (9) and a spear cavitator (7) and a duct (10) supplying from down to the container (5), and the outlet of supply duct (10) is directed to a disk (11) having conically edged furrows cut out, whereas in the upper part of the container (5) there is a duct (6) for transferring sludge to the methane fermentation reactor.
